# EUROPEAN PATENT SPECIFICATION

(11) **EP 1 930 562 B1**
(45) Date of publication and mention of the grant of the patent: **15.04.2009**
(21) Application number: 07254512.2
(22) Date of filing: 20.11.2007
(51) Int. Cl.: F01M 11/00, B62M 7/04, B62K 11/04, F16H 37/08, F16H 9/04, F16H 57/04

(54) **Straddle-type vehicle**
Grätschsitz-Fahrzeug
Véhicule de type monté à califourchon

(30) Priority: 29.11.2006 JP 2006322066; 26.01.2007 JP 2007016496
(43) Date of publication of application: 11.06.2008
(73) Proprietor: Yamaha Hatsudoki Kabushiki Kaisha, Iwata-shi, Shizuoka 438-8501 (JP)
(72) Inventor: Oishi, Akifumi, Shizuoka-ken 438-8501 (JP); Ishida, Yousuke, Shizuoka-ken 438-8501 (JP)
(74) Representative: Harris, Ian Richard

(56) References cited:
- EP-A- 0 610 617
- EP-A- 1 498 592
- JP-A- 9 250 320
- JP-A- 59 009 365

## Description

### BACKGROUND

The present invention relates to a straddle-type vehicle such as a motorcycle. More specifically, the invention relates to such a vehicle provided with an engine unit, which comprises a four-stroke engine and a belt type continuously variable transmission.

For example, JP-B-61-040864 discloses a motorcycle provided with an engine unit, which comprises a two-stroke engine arranged rearwardly of a down frame extending vertically with an axis of a cylinder extending vertically. With the engine unit, a belt type continuously variable transmission (A continuously variable transmission is referred below to as "CVT") is arranged in a crank case, which supports a crank shaft and an output shaft. The output shaft of the engine unit is connected to a rear wheel through a power transmission mechanism such as belt, chain, drive shaft, etc. Thereby, motive power is transmitted to the rear wheel through the power transmission mechanism from the output shaft of the engine unit.

A further example of belt type transmission can be seen in EP 1 498 592.

The motorcycle, which is described in JP-B-61-040864 and on which a belt type CVT is mounted, assumes the same configuration as that of ordinary motorcycles but does not need gearshift and is high in convenience.

In order to achieve a further improvement in convenience, it is demanded to mount a four-stroke engine, which has a relatively large torque in low speed, in place of a two-stroke engine of the motorcycle described in JP-B-61-040864.

However, there are problems when a two-stroke engine of the motorcycle described in JP-B-61-040864 is replaced by a four-stroke engine.

In a four-stroke engine, intake valves, exhaust valves, and a valve operating mechanism for driving of the intake valves and the exhaust valves are arranged on a cylinder head. Also, an oil reservoir portion is formed below a crank shaft to store a lubricating oil for lubrication of an engine. Therefore, a four-stroke engine is relatively long in an axial direction of a cylinder as compareed with a two-stroke engine. In trying to apply such four-stroke engine to a motorcycle, in which the engine is arranged rearwardly of a down frame extending vertically with axes of cylinders extending vertically, a vehicle cannot but be increased in total height, or decreased in minimum ground level since the engine is large in length in an axial direction of cylinders. Accordingly, when a two-stroke engine of the motorcycle described in JP-B-61-040864 is simply replaced by a four-stroke engine, it is thought difficult to make the arrangement compatible in the motorcycle.

The invention aims to provide a motorcycle mounting thereon an engine unit, which comprises a four-stroke engine and a belt type CVT and a length of which in the axial direction of a cylinder is restricted.

### SUMMARY

Aspects of the invention are defined in the claims.

An embodiment of the invention can provide a straddle-type vehicle, for example a motorcycle, that comprises an engine unit having an output shaft, a drive wheel, and a power transmission mechanism. The power transmission mechanism transmits motive power to the drive wheel from the output shaft. The motorcycle according to the invention further comprises a body frame. The body frame has a down frame extending vertically. The engine unit comprises a four-stroke engine, a continuously variable transmission, a clutch, and an engine case. The four-stroke engine includes a cylinder body and a crank shaft. The cylinder body forms a cylinder. The cylinder is arranged rearwardly of the down frame with an axis thereof extending vertically. The crank shaft is arranged below the cylinder. The continuously variable transmission includes a primary sheave, a secondary sheave shaft, a secondary sheave, and an endless belt. The primary sheave is provided on the crank shaft. The secondary sheave shaft is arranged rearwardly of the crank shaft. The secondary sheave shaft is connected to the output shaft. The secondary sheave is provided on the secondary sheave shaft. The endless belt is wound round the primary sheave and the secondary sheave. The clutch is provided between the secondary sheave shaft and the output shaft. The engine case supports the crank shaft, the secondary sheave shaft, and the output shaft. The engine case is formed with an oil reservoir portion, which is disposed below the crank shaft to store a lubricating oil. The oil reservoir portion is formed with a rear end thereof positioned rearwardly of a front end of the secondary sheave. The crank shaft is arranged with an axis thereof positioned below an axis of the secondary sheave shaft.

An embodiment of the invention can realize a motorcycle having mounted thereon an engine unit, which comprises a four-stroke engine and a belt type CVT and a length of which in an axial direction of a cylinder is restricted.

### BRIEF DESCRIPTION OF THE DRAWINGS

Embodiments of the invention are described hereinafter, by way of example only, with reference to the accompany drawings.

Fig. 1 is a side view showing an example motorcycle in which the invention is embodied.

Fig. 2 is a cross sectional view showing the construction of an engine unit.

Fig. 3 is a side view showing the construction of the engine unit.

Fig. 4 is a side view showing the construction of an engine unit, a transmission shaft of which is arranged closer to a crank shaft than a clutch shaft is.

Fig. 5 is a schematic view illustrating the positional relationship among an axis of the crank shaft, an axis of a secondary sheave shaft, an axis of a starter motor, and an axis of a balancer as viewed in side view.

### DETAILED DESCRIPTION

An example of an offroad type motorcycle 1 according to an embodiment of the invention will be described below in detail with reference to the Figures. However, the straddle type vehicle according to the invention is not limited to this embodiment. Also, in the context of the present application the term motorcycle it to be interpreted broadly to include other types of motorcycles and to include, for example, scooters, so-called mopeds, etc. Also other embodiments can include straddle-type vehicles other than motorcycles, for example, all terrain vehicles (ATVs) and the like.

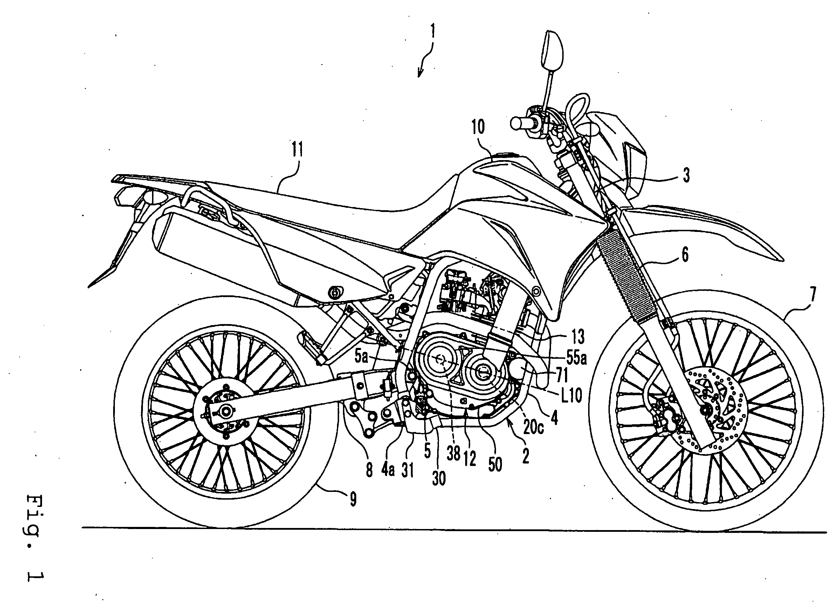

Fig. 1 is a side view showing an example motorcycle 1 according to the embodiment. First, an outline construction of the motorcycle 1 will be described with reference to Fig. 1. In addition, front and rear, and left and right directions in following descriptions are ones as seen from a crew seated on a seat 11.

The motorcycle 1 comprises a body frame 2. The body frame 2 comprises a steering head pipe 3, a down frame 4, and a seat pillar 5. The down frame 4 extends vertically. Specifically, the down frame 4 extends downward from the steering head pipe 3, bends midway, and extends substantially horizontally from a midway portion thereof. The seat pillar 5 extends above the down frame 4 and rearward from the steering head pipe 3. Tip ends of the down frame 4 and the seat pillar 5 are connected to each other. A support member 31 is mounted to a connection 4a of the down frame 4 and the seat pillar 5. The support member 31 extends forward from the connection 4a. A pair of left and right foot steps 30, on which driver's foots are put, are mounted to a tip end of the support member 31. As shown in Fig. 1, the foot steps 30 are positioned below a secondary sheave 37 described later (Fig. 1 depicts only a secondary sheave shaft 38, to which the secondary sheave 37 is mounted to) as viewed in side view.

A lower end of the steering head pipe 3 is connected to a front wheel 7 through a front fork 6, etc. A rear arm 8 extending rearward is journaled in the vicinity of a lower end (portion a little above the connection 4a) of the seat pillar 5. More specifically, a base end of the rear arm 8 is journaled by a pivot shaft 5a connected to the seat pillar 5. A rear wheel 9 serving as a drive wheel is mounted rotatably to a tip end (rear end) of the rear arm 8.

A cover 10 is arranged above the body frame 2 to cover the body frame 2. The seat 11 is mounted a little rearwardly of a center of the cover 10.

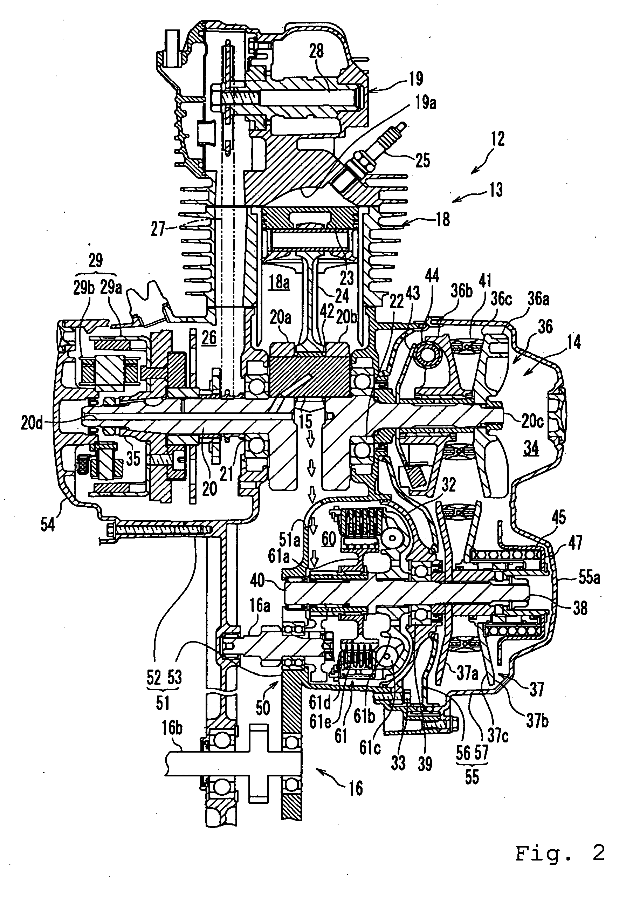

An engine unit 12 is arranged between the down frame 4 and the seat pillar 5. The engine unit 12 is mounted to the down frame 4 and the seat pillar 5. As shown in Fig. 2, the engine unit 12 is composed integrally of a four-stroke engine 13, a belt type CVT 14, a centrifugal clutch 61, a generator 29, a reduction mechanism 16, etc. Driving force generated in the engine unit 12 is transmitted to the rear wheel 9 (see Fig. 1) through a power transmission mechanism 80 (see Fig. 2) such as chain, belt, etc.

Subsequently, the construction of the engine unit 12 will be described mainly with reference to Fig. 2. The engine unit 12 comprises the four-stroke engine 13, the belt type CVT 14, the centrifugal clutch 61, the reduction mechanism 16, and the generator 29. In addition, Fig. 2 omits a partial construction of the reduction mechanism 16 for the sake of explanation.

The engine unit 12 is accommodated in a unit case 50, which serves as an engine case. The unit case 50 comprises a crank case 51, a generator case 54, and a transmission case 55.

A crank shaft 20 is accommodated in the crank case 51. The crank case 51 comprises a first case block 52 and a second case block 53, which butt against each other in a vehicle width direction. The first case block 52 is positioned on the left of a piston 23. The second case block 53 is positioned on the right of the piston 23.

The transmission case 55 is mounted to a right side of the second case block 53. The transmission case 55 comprises an inner case 56 and an outer case 57. The inner case 56 is mounted to the right side of the second case block 53. The outer case 57 is mounted to a right side of the inner case 56. The outer case 57 and the inner case 56 compartment and form a belt chamber 34.

The generator case 54 is mounted detachably to a left side of a front half of the first case block 52. The generator case 54 together with the first case block 52 compartments and forms a generator chamber, in which the generator 29 is accommodated. In addition, the generator case 54 is arranged in opposition to a primary sheave 36 in the vehicle width direction.

The four-stroke engine 13 comprises a crank shaft 20 extending horizontally in the vehicle width direction, a cylinder body 18, which forms a substantially cylindrical-shaped cylinder 18a, and a cylinder head 19. The crank shaft 20 is accommodated in the crank case 51. The crank shaft 20 is supported on the first case block 52 and the second case block 53 with bearings 21, 22 therebetween.

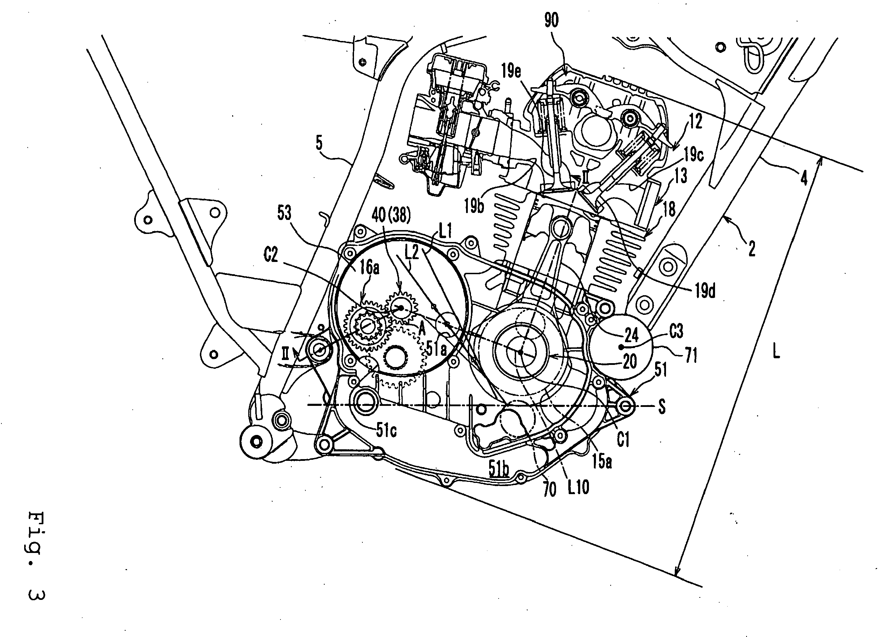

The cylinder 18a is connected forwardly and upwardly obliquely to the crank case 51 (see Figs. 1 and 3). The cylinder 18a is arranged rearwardly of the down frame 4 with an axis thereof extending vertically. The cylinder head 19 is connected to a tip end of the cylinder body 18. The piston 23 is inserted slidably into the cylinder 18a. One end of a connecting rod 24 is connected to a side of the piston 23 toward the crank shaft 20. The other end of the connecting rod 24 is connected to the crank shaft 20 by a crank pin 15 arranged between a left crank arm 20a and a right crank arm 20b of the crank shaft 20. Thereby, the piston 23 reciprocates in the cylinder 18a upon rotation of the crank shaft 20.

Formed in the cylinder head 19 are a recess 19a communicated to the cylinder 18a and an intake port 19b and an exhaust port 19c (also, see Fig. 3), which are communicated to the recess 19a. An intake valve 19d is arranged in the intake port 19b. On the other hand, an exhaust valve 19e is arranged in the exhaust port 19c.

A cam chain chamber 26 is formed on the left in the cylinder body 18 to provide communication between an interior of the crank case 51 and an interior of the cylinder head 19. A cam chain 27 is arranged in the cam chain chamber 26. The cam chain 27 is wound round the crank shaft 20 and a cam shaft 28. The cam shaft 28 constitutes a part of a valve operating mechanism 90. The intake valve 19d is driven by the valve operating mechanism 90 including the cam shaft 28 whereby the intake port 19b is opened and closed. Also, the valve operating mechanism 90 drives the exhaust valve 19e whereby the exhaust port 19c is opened and closed. The intake port 19b and the exhaust port 19c are opened and closed whereby intake into the cylinder 18a and exhaust from the cylinder 18a are performed.

An ignition plug 25 is mounted to the cylinder head 19. An ignition part positioned at a tip end of the ignition plug 25 is exposed into the recess 19a.

A recess, which constitutes a clutch chamber 60, is formed on the right of a rear half of the second case block 53. A clutch cover 32 is mounted airtightly to the recess. The clutch cover 32 is fixed detachably to the second case block 53 by a bolt 33.

Formed on the second case block 53 is an oil supply hole 51a opened to the clutch chamber 60 and an oil discharge hole 51c as shown in Fig. 3. Therefore, a space in the crank case 51 and the clutch chamber 60 are communicated to each other.

A left end of the crank shaft 20 extends through the first case block 52 to reach an interior of the generator case 54. The generator 29 is mounted to the left end of the crank shaft 20. Specifically, the generator 29 comprises a rotor 29a and a stator 29b. The rotor 29a is formed to be cylindrical in shape. The stator 29b is arranged in the rotor 29a.

The stator 29a is fixed to the generator case 54 not to enable rotation and displacement. On the other hand, the rotor 29a is fixed to a sleeve 35, which rotates together with the crank shaft 20. Thereby, as the crank shaft 20 rotates, the rotor 29a rotates relative to the stator 29b to generate electric power.

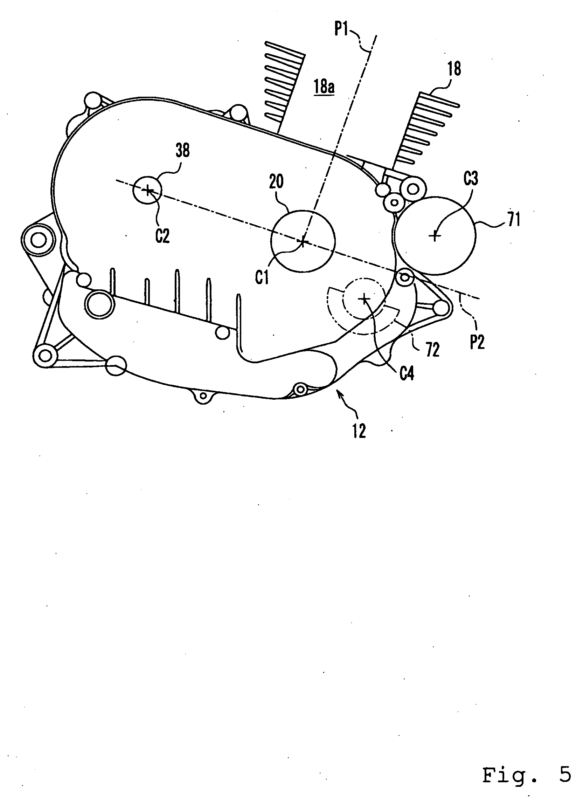

As shown in Fig. 1, the motorcycle 1 is provided with a starter motor 71. The starter motor 71 severs to rotate the crank shaft 20 to start up the engine 13. As shown in Fig. 5, the starter motor 71 is arranged so that an axis C3 thereof is positioned forwardly of an imaginary plane P1 including an axis of the cylinder 18a and an axis C1 of the crank shaft 20 as viewed in side view. Further, the starter motor 71 is arranged so that a rear end thereof is positioned forwardly of the imaginary plane P1.

Also, as shown in Fig. 5, the motorcycle 1 is provided with a balancer 72. The balancer 72 serves to decrease a weight deviation in a direction of rotation about the axis C1 of the crank shaft 20 to make rotation of the crank shaft 20 smooth. The balancer 72 is connected to the crank shaft 20 through a gear (not shown), etc. Therefore, the balancer 72 rotates as the crank shaft 20 rotates. An axis C3 of the balancer 72 is different from the axis C1 of the crank shaft 20 as shown in Fig. 5. As shown in Fig. 5, the balancer 72 is arranged so that an axis C4 thereof is positioned forwardly of the imaginary plane P1 as viewed in side view. Further, the balancer 72 is arranged so that a rear end thereof is positioned forwardly of the imaginary plane P1.

Also, as shown in Fig. 5, a further imaginary plane P2 including the axis C1 of the crank shaft 20 and an axis C2 of the secondary sheave shaft 38 passes between the axis C3 of the starter motor 71 and the axis C4 of the balancer 72. In other words, in a vertical direction, the axis C3 of the starter motor 71 is positioned above the imaginary plane P2 while the axis C4 of the balancer 72 is positioned below the imaginary plane P2.

On the other hand, the belt type CVT 14 is accommodated in the belt chamber 34. The belt type CVT 14 comprises the primary sheave 36 and the secondary sheave 37. The secondary sheave 37 is arranged rearwardly of the primary sheave 36. The secondary sheave 37 is larger in diameter than the primary sheave 36.

The crank shaft 20 extends through the second case block 53 and the inner case 56 to extend to the belt chamber 34. A right portion (strictly, a portion on the right of the bearing 22) of the crank shaft 20, which reaches the belt chamber 34, constitutes a primary sheave shaft 20c. The primary sheave 36 is provided on the primary sheave shaft 20c. Specifically, according to the embodiment, the primary sheave 36 is mounted to the primary sheave shaft 20c. The primary sheave 36 rotates together with the primary sheave shaft 20c. However, provided that the primary sheave 36 rotates upon rotation of the primary sheave shaft 20c, it is not required that the primary sheave be mounted directly to the primary sheave shaft 20c.

The primary sheave 36 comprises a primary stationary sheave body 36a, a primary moving sheave body 36b, a roller weight 44, and a cam plate 43. The primary stationary sheave body 36a is fixed to a right tip end of the primary sheave shaft 20c. The primary moving sheave body 36b is mounted to the primary sheave shaft 20c on the left of the primary stationary sheave body 36a. The primary moving sheave body 36b is axially movable relative to the primary sheave shaft 20c. The primary stationary sheave body 36a and the primary moving sheave body 36b constitute a belt groove 36c, which is variable in width.

The cam plate 43 is arranged further on the left of the primary moving sheave body 36b. The cam plate 43 is fixed to the primary sheave shaft 20c. A spacing between the primary moving sheave body 36b and the cam plate 43 becomes small radially outward. The roller weight 44 is arranged between the primary moving sheave body 36b and the cam plate 43. The roller weight 44 is arranged to enable displacement radially inward and outward.

On the other hand, the secondary sheave shaft 38 is arranged on a rear half of the transmission case 55. The secondary sheave shaft 38 is arranged rearwardly of the primary sheave shaft 20c. As shown in Fig. 3, the crank shaft 20 is arranged so that an axis thereof is positioned below an axis of the secondary sheave shaft 38.

The secondary sheave shaft 38 extends through the inner case 56 and the clutch cover 32 to extend into the clutch chamber 60. The secondary sheave shaft 38 is mounted to the clutch cover 32 with a bearing 39 therebetween. The secondary sheave 37 is provided on the secondary sheave shaft 38 within the belt chamber 34. Specifically, according to the embodiment, the secondary sheave 37 is mounted to the secondary sheave shaft 38. The secondary sheave 37 rotates together with the secondary sheave shaft 38. However, provided that the secondary sheave 37 rotates upon rotation of the secondary sheave shaft 38, it is not required that the secondary sheave be mounted directly to the secondary sheave shaft 38.

The secondary sheave 37 comprises a secondary stationary sheave body 37a and a secondary moving sheave body 37b. The secondary stationary sheave body 37a is fixed to the secondary sheave shaft 38 in the belt chamber 34. The secondary moving sheave body 37b is mounted to the secondary sheave shaft 38 on the right of the secondary stationary sheave body 37a. The secondary moving sheave body 37b is axially movable relative to the secondary sheave shaft 38. The secondary stationary sheave body 37a and the secondary moving sheave body 37b constitute a belt groove 37c, which is variable in width.

A substantially cylindrical-shaped spring catch 47 is fixed to a right tip end of the secondary sheave shaft 38. A compression coil spring 45 is arranged between the spring catch 47 and the secondary moving sheave body 37b. The bias of the compression coil spring 45 biases the secondary moving sheave body 37b leftward, that is, toward the secondary stationary sheave body 37a.

An endless belt 41 having a substantially trapezoidal-shaped cross section is wound round the belt groove 37c of the secondary sheave 37 and the belt groove 36c of the primary sheave 36. Therefore, when the primary sheave 36 rotates together with the crank shaft 20, torque thereof is transmitted to the secondary sheave 37 through the endless belt 41. Consequently, the secondary sheave shaft 38 also rotates together with the secondary sheave 37. In addition, the endless belt 41 may comprise, for example, a resin block belt.

As shown in Fig. 1, a center (center of the secondary sheave shaft 38) of the secondary sheave 37 is positioned in a higher position than that of a center (center of the primary sheave shaft 20c) of the primary sheave 36. That is, the belt type CVT 14 is arranged in a manner to extend rearward and upward. The pivot shaft 5a, to which the tip end of the rear arm 8 is mounted, is provided in a lower position than that of the center of the secondary sheave 37.

The secondary sheave shaft 38 is connected to an output shaft 16b through the centrifugal clutch 61, etc. Specifically, a portion (portion positioned in the clutch chamber 60) of the secondary sheave shaft 38 on the left of the clutch cover 32 constitutes a clutch shaft 40. The centrifugal clutch 61 is mounted to the clutch shaft 40. Further, the reduction mechanism 16 is connected to the centrifugal clutch 61. The centrifugal clutch 61 provides a connection or a disconnection between the secondary sheave shaft 38 and the reduction mechanism 16 according to the rotating speed of the secondary sheave shaft 38 (the clutch shaft 40).

The centrifugal clutch 61 comprises a clutch boss 61a connected to the reduction mechanism 16, a substantially cylindrical-shaped clutch housing 61b, and a roller weight 61c. The roller weight 61c is arranged to enable displacement radially inward and outward. The clutch housing 61b is fixed to the clutch shaft 40. Therefore, the clutch housing 61b rotates together with the clutch shaft 40 (the secondary sheave shaft 38). The clutch housing 61b comprises a plurality of clutch plates 61d arranged at substantially equal intervals relative to one another. The mutually adjacent clutch plates 61d are variable in interval.

The clutch boss 61a is arranged in the clutch housing 61b. The clutch boss 61a is rotatable relative to the clutch shaft 40. The clutch boss 61a comprises a plurality of friction plates 61e arranged at substantially equal intervals relative to one another. The mutually adjacent friction plates 61a are variable in interval.

When the secondary sheave shaft 38 is small in rotating speed, the clutch plates 61d and the friction plates 61e separate from each other. The clutch housing 61b and the clutch boss 61a are not connected to each other. Therefore, torque of the secondary sheave shaft 38 is not transmitted to the reduction mechanism 16.

On the other hand, when the secondary sheave shaft 38 is large in rotating speed, the roller weight 61c is displaced radially outward. -Thereby, a distance between the adjacent friction plates 61e becomes small. The respective clutch plates 61d and the respective friction plates 61e are put in a state of pressure contact. Consequently, the clutch housing 61b and the clutch boss 61a are put in a connected state, so that torque of the secondary sheave shaft 38 is transmitted to the reduction mechanism 16. In detail, the clutch boss 61a and a reduction shaft 16a of the reduction mechanism 16 mesh with each other, and the clutch boss 61a rotates whereby the reduction shaft 16a also rotates. Torque transmitted to the reduction shaft 16a is output from an output shaft (not shown) of the reduction mechanism 16 to be transmitted to the rear wheel 9 (see Fig. 1).

According to the embodiment, the reduction shaft 16a of the reduction mechanism 16 is arranged in a position more distant from the crank shaft 20 than from the clutch shaft 40, that is, rearward as shown in Figs. 2 and 3. In other words, the clutch shaft 40, to which the wet type centrifugal clutch 61 is mounted, is arranged closer to the crank shaft 20 than the reduction shaft 16a is. A construction is provided, in which any rotating shaft for prevention of oil supply to the clutch shaft 40 is not substantially existent between the crank shaft 20 and the clutch shaft 40. In particular, according to the embodiment, any rotating shaft is not arranged between the crank shaft 20 and the clutch shaft 40.

Subsequently, a construction, in which a lubricating oil is supplied to the clutch shaft 40, according to the embodiment, will be described with reference to Figs. 2 and 3. As shown in Fig. 3, an oil reservoir portion 51b is provided on a bottom of the crank case 51 to store the lubricating oil. Specifically, the oil reservoir portion 51b is formed to extend rearwardly of a front end of the secondary sheave 37 from forwardly of a front end of the primary sheave 36. More specifically, a rear end of the oil reservoir portion 51b is positioned rearwardly of an axis of the secondary sheave shaft 38. That is, according to the embodiment, the oil reservoir portion 51b is formed generally below the primary sheave 36 and the secondary sheave 37.

A lubricating oil stored in the oil reservoir portion 51b is supplied to a connection 42 of the crank shaft 20 and the connecting rod 24 by an oil pump 70, which is arranged as lubricating oil supply mechanism on the oil reservoir portion 51b in the crank case 51. Specifically, the lubricating oil drawn by the oil pump 70 is guided to one or a plurality of oil supply passages 20d, which are substantially circular in shape as viewed in plan view and opened to a left end surface of the crank shaft 20, to be supplied to the connection 42 via the oil supply passage or passages 20d.

The lubricating oil supplied to the connection 42 scatters from the connection 42 as the crank shaft 20 rotates. Formed on the second case block 53 is an oil supply hole 51a to guide a lubricating oil, which scatters as the crank shaft 20 rotates, into the clutch chamber 60 to supply the same to the clutch shaft 40. Specifically, as shown in Fig. 3, the oil supply hole 51a is formed on the second case block 53 so that a tangent line L1 tangent to both a circular track 15a of the crank pin 15 and an outer ring of the oil supply hole 51a is positioned above a lower end A of a body of the clutch shaft 40 as viewed in side view. In addition, the tangent line L1 is more specifically a tangent line, which is tangent to a lower portion of the circular track 15a of the crank pin 15 and an upper portion of the oil supply hole 51a and passes between the oil supply hole 51a and the circular track 15a to extend rearward and obliquely upward. Further, at least a portion of the oil supply hole 51a is formed on the second case block 53 so as to be positioned above a straight line L10, which passes the axis C1 of the crank shaft 20 and an axis C2 of the clutch shaft 40. The crank shaft 20 and the clutch shaft 40 are arranged so that portions thereof face each other with the oil supply hole 51a therebetween.

The lubricating oil introduced into the clutch chamber 60 from the oil supply hole 51a is supplied to the clutch shaft 40 and thereafter returns again to the oil reservoir portion 51b from the oil discharge hole 51c provided downwardly and a little rearwardly of the second case block 53.

In addition, the oil discharge hole 51c is positioned above a lowermost point of the circular track 15a of the connection 42 in a vertical directtion as viewed in side view. Further, the oil discharge hole 51c is positioned in the same position as that of the crank shaft 20, or above the crank shaft 20 in the vertical direction as viewed in side view.

As described above, the engine unit 12 according to the embodiment comprises the primary sheave 36 and the secondary sheave 37 arranged rearwardly of the primary sheave 36. Therefore, the engine unit 12 is larger in longitudinal length than an ordinary engine unit of a so-called manual transmission type. According to the embodiment, in view of this feature, the oil reservoir portion 51b is formed to be lengthy in a longitudinal direction so as to extend rearward from the front end of the secondary sheave 37 as shown in Fig. 3. In this manner, the oil reservoir portion 51b normally arranged below the crank shaft 20 is formed to be lengthy in the longitudinal direction whereby it is possible to ensure a volume for the oil reservoir portion 51b and to shorten a length of the oil reservoir portion 51b in the axial direction of the cylinder 18a. Thereby, a length L of the engine unit 12 in the axial direction of the cylinder 18a is restricted.

Also, according to the embodiment, since the cylinder 18a is arranged so that an axis of the cylinder 18a extends vertically, a length of the engine unit 12 in the longitudinal direction is also restricted.

By the way, with the belt type CVT 14, the secondary sheave 37 is larger in diameter than the primary sheave 36. Therefore, when the axis C1 of the crank shaft 20 provided with the primary sheave 36 and the axis C2 of the secondary sheave shaft 38 provided with the secondary sheave 37 are arranged to be made horizontal, a lower end of the secondary sheave 37 is positioned below a lower end of the primary sheave 36. Consequently, the length L of the engine unit 12 in the axial direction of the cylinder 18a is lengthened.

In contrast, according to the embodiment, the axis C1 of the crank shaft 20 is positioned below the axis C2 of the secondary sheave shaft 38. In other words, the axis C2 of the secondary sheave shaft 38 is positioned above the axis C1 of the crank shaft 20. Therefore, the length L of the engine unit 12 in the axial direction of the cylinder 18a is shortened. The axis C2 of the secondary sheave shaft 38 is preferably positioned in substantially the same position as that of the axis C1 of the crank shaft 20, or above the axis C1 of the crank shaft 20 in the axial direction of the cylinder 18a. According to this, the length L of the engine unit 12 in the axial direction of the cylinder 18a can be further effectively decreased.

Also, the embodiment has a large in low-speed torque and high convenience due to the adoption of the four-stroke engine 13.

In addition, for example, in the case where the axis C3 of the starter motor 71 is positioned rearwardly of the imaginary plane P1 and the axis C4 of the balancer 72 is positioned rearwardly of the imaginary plane P1, the starter motor 71, the balancer 72, and the secondary sheave 37 interfere with one another, so that it is difficult to make the axis C1 of the crank shaft 20 lower than the axis C2 of the secondary sheave shaft 38.

In contrast, according to the embodiment, as shown in Fig. 5, the starter motor 71 is arranged so that its axis C3 is positioned forwardly of the imaginary plane P1 as viewed in side view. Also, the balancer 72 is arranged so that its axis C4 is positioned forwardly of the imaginary plane P1 as viewed in side view. Therefore, the starter motor 71, the balancer 72, and the secondary sheave 37 are inhibited from interfering with one another. Accordingly, it is possible to readily make the axis C1 of the crank shaft 20 lower than the axis C2 of the secondary sheave shaft 38.

Also, since the starter motor 71 and the balancer 72 are not present on the axis of the cylinder 18a, the length of the engine unit 12 in the axial direction of the cylinder 18a is relatively decreased.

Also, for example, in the case where both the starter motor 71 and the balancer 72 are positioned above the imaginary plane P2 and in the case where both the starter motor 71 and the balancer 72 are positioned below the imaginary plane P2, the starter motor 71 and the balancer 72 are aligned in a direction, in which the primary sheave 36 and the secondary sheave 37 are arranged. Therefore, a length of the engine unit 12 in a direction, in which the primary sheave 36 and the secondary sheave 37 are arranged, is relatively increased. Consequently, the length of the engine unit 12 in the longitudinal direction becomes relatively large.

In contrast, according to the embodiment, in the vertical direction, the axis C3 of the starter motor 71 is positioned above the imaginary plane P2 while the axis C4 of the balancer 72 is positioned below the imaginary plane P2. Therefore, the starter motor 71 and the balancer 72 are not aligned in that direction, in which the primary sheave 36 and the secondary sheave 37 are arranged. Therefore, a length of the engine unit 12 in that direction, in which the primary sheave 36 and the secondary sheave 37 are arranged, can be relatively shortened. Consequently, the length of the engine unit 12 in the longitudinal direction becomes relatively small.

According to the embodiment, as shown in Figs. 2 and 3, the oil supply hole 51a and the oil discharge hole 51c are formed on the second case block 53. Therefore, the clutch chamber 60 is communicated to an interior of the crank case 51. Accordingly, when the engine unit 12 vibrates or fluctuates to cause a lubricating oil in the oil reservoir portion 51b to splash, or to cause an oil level of the lubricating oil to fluctuate, there is a fear that a large quantity of the lubricating oil flows into the clutch chamber 60 through the oil supply hole 51a and the oil discharge hole 51c. Consequently, there is a fear that a surplus quantity of the lubricating oil is supplied to the centrifugal clutch 61. When a surplus quantity of the lubricating oil is supplied to the centrifugal clutch 61, there is caused a problem that loss in energy transmission is generated in the centrifugal clutch 61 by viscous resistance of the lubricating oil. Also, there is also caused a problem that the centrifugal clutch 61 is decreased in rotating speed. Further, there is also caused a problem that the lubricating oil is increased in temperature and the lubricating oil is degraded in lubrication.

As described above, according to the embodiment, however, the axis C2 of the secondary sheave shaft 38 is positioned above the axis C1 of the crank shaft 20 as viewed in side view. That is, the belt type CVT 14 is arranged in a manner to extend rearward and upward. In other words, as shown in Figs. 1 and 3, the straight line L10 passing through the center of the primary sheave shaft 20c and the center of the secondary sheave shaft 38 rises rearward as viewed in plan view. Therefore, as shown in Fig. 3, the secondary sheave shaft 38, to which the centrifugal clutch 61 is mounted, is positioned in a relatively higher position than an oil level S of the lubricating oil in the oil reservoir portion 51b. Also, the oil supply hole 51a and the oil discharge hole 51c are also formed in relatively higher positions than the oil level S.

Therefore, even when the engine unit 12 vibrates or fluctuates to cause a lubricating oil in the oil reservoir portion 51b to splash, or to cause an oil level of the lubricating oil to fluctuate, the lubricating oil is inhibited from entering the clutch chamber 60 from the oil discharge hole 51c. Also, a lubricating oil is inhibited from being supplied excessively to the centrifugal clutch 61. Accordingly, it is possible to suppress loss in energy transmission in the centrifugal clutch 61. The centrifugal clutch 61 can be inhibited from being decreased in rotating speed. Further, it is possible to inhibit the lubricating oil from being increased in temperature. Consequently, it is possible to inhibit the lubricating oil from being decreased in lubrication. In addition, the construction is especially effective in a straddle-type vehicle, which runs on a relatively irregular land such as dirt course, etc. , like the offroad type motorcycle according to the embodiment.

From the viewpoint of especially effectively suppressing entrance of the lubricating oil into the clutch chamber 60 from the oil discharge hole 51c, the oil discharge hole 51c is preferably positioned above the lowermost point of the circular track 15a of the connection 42 in the vertical direction as viewed in side view. Further, the oil discharge hole 51c is preferably positioned in the same position as that of the crank shaft 20, or above the crank shaft 20 in the vertical direction as viewed in side view.

In this manner, according to the embodiment, while an lubricating oil is effectively inhibited from being supplied excessively to the centrifugal clutch 61, an lubricating oil required for the centrifugal clutch 61 is efficiently supplied as described later. In particular, according to the embodiment, since an lubricating oil is supplied to the centrifugal clutch 61 as the crank shaft 20 rotates, the crank shaft 20 and the clutch shaft 40 are high in rotating speed per unit time, and when a relatively large quantity of the lubricating oil becomes necessary, a further large quantity of the lubricating oil is supplied to the centrifugal clutch 61, so that seizure of the centrifugal clutch 61 is surely suppressed.

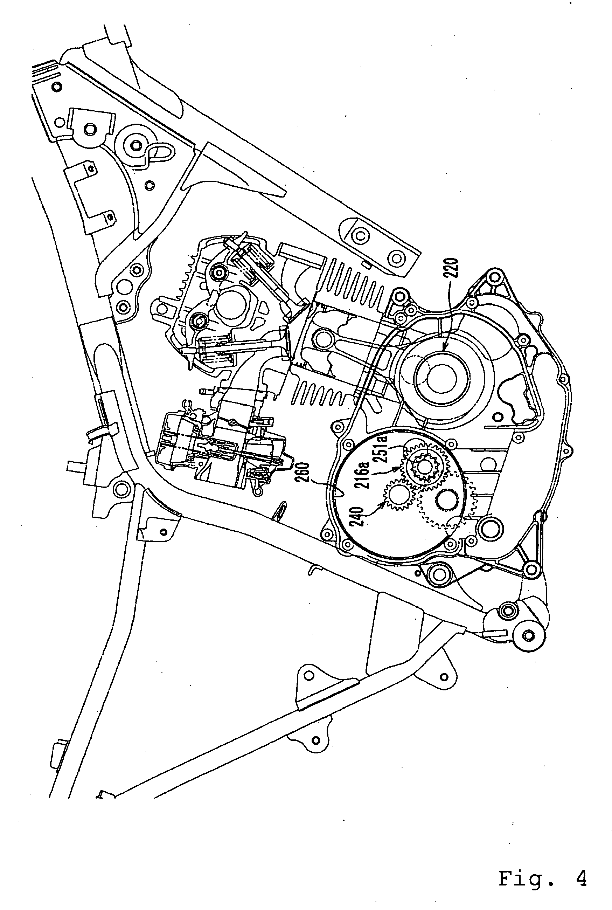

For example, with the construction shown in Fig. 4, a reduction shaft 216a inhibits a lubricating oil introduced into a clutch chamber 260 from being supplied to a clutch shaft 240. Specifically, as shown in Fig. 4, since the reduction shaft 216a is arranged closer to a crank shaft 220 than to the clutch shaft 240. Therefore, a major part of the lubricating oil introduced into the clutch chamber 260 from an oil supply hole 251a strikes against the reduction shaft 216a. With the construction shown in Fig. 4, a part of the lubricating oil striking against the reduction shaft 216a to scatter is only supplied to the clutch shaft 240 and so it is difficult to efficiently supply a lubricating oil to the clutch shaft 240.

In contrast, the reduction shaft (transmission shaft) 16a is arranged rearwardly of the clutch shaft 40 according to the embodiment as shown in Figs. 2 and 3. That is, the clutch shaft 40 is arranged closer to the crank shaft 20 than to the reduction shaft 16a. Accordingly, the lubricating oil supplied from the connection 42 is efficiently supplied to the clutch shaft 40 and the centrifugal clutch 61 without being obstructed by the reduction shaft 16a, etc. In particular, according to the embodiment, a construction is realized, in which any rotating shaft is not existent between the crank shaft 20 and the clutch shaft 40, and preferable from the viewpoint of efficient supply of the lubricating oil to the clutch shaft 40 and the centrifugal clutch 61.

As described above, according to the embodiment, since efficient supply of a lubricating oil to the centrifugal clutch 61 is realized, seizure of the centrifugal clutch 61 is effectively suppressed. Also, it is possible to make the oil supply hole 51a relatively small in size. Further, a considerably large oil supply capacity per unit time is not demanded of the oil pump 70 and so it is possible to make the oil pump 70 and hence the engine unit 12 small in size and light in weight.

Also, by arranging the engine unit 12 so that a center (center of the secondary sheave shaft 38) of the secondary sheave 37 is positioned above a center (center of the primary sheave shaft 20c) of the primary sheave 36, it is possible to shorten a length of the engine unit 12 in the longitudinal direction. Therefore, it is possible to arrange the seat pillar 5 further forward. Consequently, it is also possible to arrange the pivot shaft 5a further forward, so that it is possible to lengthen the rear arm 8. Accordingly, the kinematic performance of the motorcycle 1 can be improved.

From the viewpoint of further improving kinematic performance of the motorcycle 1, the pivot shaft 5a is preferably positioned below the center of the secondary sheave 37 as viewed in side view. This is because the unit case 50 and the pivot shaft 5a can be inhibited from interfering with each other, so that it is possible to arrange the pivot shaft 5a further forward.

While the embodiment has been described with respect to an example, in which in the vertical direction, the axis C3 of the starter motor 71 is positioned above the imaginary plane P2 while the axis C4 of the balancer 72 is positioned below the imaginary plane P2. However, the invention is not limited to this. The axis C3 of the starter motor 71 may be positioned below the imaginary plane P2 while the axis C4 of the balancer 72 may be positioned above the imaginary plane P2.

The invention finds application to a straddle-type vehicle provided with a belt type continuously variable transmission. In particular, the invention is useful for a straddle-type vehicle provided with a belt type continuously variable transmission and having a relatively large displacement.

### DESCRIPTION OF REFERENCE NUMERALS AND SIGNS

1: motorcycle
2: body frame
3: steering head pipe
4: down frame
5: seat pillar
5a: pivot shaft
8: rear arm
9: rear wheel
12: engine unit
13: engine
14: belt type continuously variable transmission (CVT) 15: crank pin
15a: circular track
16: reduction mechanism
16a: reduction shaft
20: crank shaft
20c: primary sheave shaft
20d: oil supply passage
30: foot step
36: primary sheave
37: secondary sheave
38: secondary sheave shaft
40: clutch shaft
50: unit case
51: crank case
51a: oil supply hole
51b: oil reservoir portion
51c: oil discharge hole
54: generator case
55: transmission case
60: clutch chamber
61: centrifugal type clutch
70: oil pump

## Claims

1. A straddle-type vehicle comprising
an engine unit having an output shaft,
a drive wheel, and
a power transmission mechanism for transmission of motive power to the drive wheel from the output shaft, and
further comprising a body frame having a down frame extending vertically, and
wherein the engine unit comprises
a four-stroke engine including a cylinder body, which forms a cylinder arranged rearwardly of the down frame with an axis thereof extending vertically, and a crank shaft arranged below the cylinder,
a continuously variable transmission including a primary sheave provided on the crank shaft, a secondary sheave shaft arranged rearwardly of the crank shaft to be connected to the output shaft, a secondary sheave provided on the secondary sheave shaft, and an endless belt wound round the primary sheave and the secondary sheave,
a clutch provided between the secondary sheave shaft and the output shaft, and
an engine case, which supports the crank shaft, the secondary sheave shaft, and the output shaft and in which an oil reservoir portion is formed below the crank shaft to store a lubricating oil,
the oil reservoir portion is formed with a rear end thereof positioned rearwardly of a front end of the secondary sheave, and
the crank shaft is arranged with an axis thereof positioned below an axis of the secondary sheave shaft.

2. The straddle type vehicle according to claim 1, wherein the engine unit further comprises
a starter motor for rotation of the crank shaft, and
a balancer having a different axis from the axis of the crank shaft and rotating as the crank shaft rotates, and
wherein the axis of the balancer and an axis of the starter motor are positioned forwardly of an imaginary plane including the axis of the cylinder and the axis of the crank shaft as viewed in side view.

3. The straddle type vehicle according to claim 2, wherein in a vertical direction, the axis of the balancer is positioned on one side of a further imaginary plane including the axis of the crank shaft and an axis of the secondary sheave shaft while the axis of the starter motor is positioned on the other side of the further imaginary plane.

4. The straddle type vehicle of any of preceding claim, wherein the straddle type vehicle is a motorcycle.

## Patentansprüche

1. Grätschsitz-Fahrzeug, welches aufweist:
eine Motoreinheit mit einer Ausgangswelle,
ein Antriebsrad und
einen Kraftübertragungsmechanismus für die Übertragung von Motorkraft auf das Antriebsrad von der Ausgangswelle, und
welches weiterhin eine Karosserie aufweist mit einem sich in vertikaler Richtung erstrekkenden unteren Chassis und
wobei die Motoreinheit aufweist:
einen Viertaktmotor mit einem Zylinderkörper, welcher einen hinter dem unteren Chassis angeordneten Zylinder bildet, dessen eine Achse sich in vertikaler Richtung erstreckt, und einer unterhalb des Zylinders angeordneten Kurbelwelle,
ein kontinuierlich variables Getriebe mit einer auf der Kurbelwelle vorgesehenen ersten Laufrolle, einer hinter der Kurbelwelle angeordneten zweiten Laufrollenwelle für die Verbindung mit der Ausgangswelle, einer auf der zweiten Laufrollenwelle vorgesehenen zweiten Laufrolle und einem um die erste Laufrolle und die zweite Laufrolle herum gewundenen Endlosband,
eine zwischen der zweiten Laufrollenwelle und der Ausgangswelle vorgesehene Kupplung und
ein Motorgehäuse, welches die Kurbelwelle, die zweite Laufrollenwelle und die Ausgangswelle hält, und wobei ein Ölreservoirabschnitt unterhalb der Kurbelwelle ausgebildet ist, um ein Schmieröl aufzunehmen bzw. zu lagern,
der Ölreservoirabschnitt so ausgebildet ist, daß ein hinteres Ende desselben hinter einem vorderen Ende der zweiten Laufrolle angeordnet ist, und
die Kurbelwelle so angeordnet ist, daß eine Achse derselben unterhalb einer Achse der zweiten Laufrollenwelle angeordnet ist.

2. Grätschsitz-Fahrzeug nach Anspruch 1, wobei die Motoreinheit weiterhin aufweist:
einen Startermotor für das Drehen der Kurbelwelle und
einen Stabilisator, welcher eine Achse hat, die sich von der Achse der Kurbelwelle unterscheidet, und sich dreht, wenn sich die Kurbelwelle dreht, und
wobei die Achse des Stabilisators und eine Achse des Startermotors vor einer imaginären Ebene angeordnet sind, die die Achse des Zylinders und die Achse der Kurbelwelle beinhaltet, wie in Seitenansicht zu sehen.

3. Grätschsitz-Fahrzeug nach Anspruch 2, wobei in einer vertikalen Richtung die Achse des Stabilisators an einer Seite einer weiteren imaginären Ebene angeordnet ist, die die Achse der Kurbelwelle und eine Achse der zweiten Laufrollenwelle beinhaltet, während die Achse des Startermotors an der anderen Seite der weiteren imaginären Ebene angeordnet ist.

4. Grätschsitz-Fahrzeug nach einem der vorangegangenen Ansprüche, wobei das Grätschsitz-Fahrzeug ein Motorrad ist.

## Revendications

1. Véhicule du type monté à califourchon comportant
un bloc-moteur ayant un arbre de sortie,
une roue motrice, et
un mécanisme de transmission de puissance destiné à transmettre une puissance motrice de l'arbre de sortie à la roue motrice, et
comportant en outre un cadre de carrosserie ayant un cadre descendant s'étendant verticalement, et
dans lequel le bloc-moteur comporte
un moteur à quatre temps comprenant un corps de cylindre, qui forme un cylindre agencé en arrière du cadre descendant dont un axe s'étend verticalement, et un vilebrequin agencé en dessous du cylindre,
une transmission variable en continu comprenant une poulie primaire située sur le vilebrequin, un arbre de poulie secondaire agencé en arrière du vilebrequin pour être relié à l'arbre de sortie, une poulie secondaire située sur l'arbre de poulie secondaire, et une courroie sans fin enroulée autour de la poulie primaire et de la poulie secondaire,
un embrayage prévu entre l'arbre de poulie secondaire et l'arbre de sortie, et
un carter de moteur, qui supporte le vilebrequin, l'arbre de poulie secondaire et l'arbre de sortie et dans lequel une partie à réservoir d'huile est formée en dessous du vilebrequin pour emmagasiner une huile lubrifiante,
la partie à réservoir d'huile est formée de façon qu'une extrémité arrière de cette partie soit positionnée en arrière d'une extrémité avant de la poulie secondaire, et
le vilebrequin est agencé de manière qu'un axe de celui-ci soit positionné en dessous d'un axe de l'arbre de poulie secondaire.

2. Véhicule du type monté à califourchon selon la revendication 1, dans lequel le bloc-moteur comporte en outre
un moteur de démarreur destiné à faire tourner le vilebrequin, et
un élément d'équilibrage ayant un axe différent de l'axe du vilebrequin et tournant en même temps que tourne le vilebrequin, et
dans lequel l'axe de l'élément d'équilibrage et un axe du moteur de démarreur sont positionnés en avant d'un plan imaginaire contenant l'axe du cylindre et l'axe du vilebrequin comme vu de côté.

3. Véhicule du type monté à califourchon selon la revendication 2, dans lequel, dans une direction verticale, l'axe de l'élément d'équilibrage est positionné sur un côté d'un autre plan imaginaire contenant l'axe du vilebrequin et un axe de l'arbre de poulie secondaire, tandis que l'axe du moteur de démarreur est positionné sur l'autre côté de l'autre plan imaginaire.

4. Véhicule du type monté à califourchon selon l'une quelconque des revendications précédentes, lequel véhicule du type monté à califourchon est une motocyclette.
